# EUROPEAN PATENT APPLICATION

(11) **EP 3 462 677 A1**
(43) Date of publication of application: **03.04.2019**
(21) Application number: 17193411.0
(22) Date of filing: 27.09.2017
(51) Int. Cl.: H04L 12/28

(54) **COMMUNICATION MODULE FOR A HOUSEHOLD APPLIANCE**

(71) Applicant: ELECTROLUX APPLIANCES AKTIEBOLAG, 105 45 Stockholm (SE)
(72) Inventor: KÄSER, Erhard, 91541 Rothenburg ob der Tauber (DE); HOFFMANN, Peter, 91541 Rothenburg ob der Tauber (DE); BUNZEL, Volkmar, 91541 Rothenburg/Tauber (DE); KRÄMER, Daniel, 91541 Rothenburg ob der Tauber (DE)
(74) Representative: Electrolux Group Patents

(57) **Abstract**

A communication module (24) for a household appliance (10), the communication module (24) comprising:
a first wired interface (36) for connection to a serial bus of the household appliance;
a second wired interface (40) adapted for connecting a USB device; and
a wireless communication interface (30).

## Description

Modern household appliances sometimes are equipped with communication modules which have an interface for wire connection to a serial bus of the household appliance and a wireless communication interface, such as a wireless LAN connection so that the household appliance can communicate with a local area network, for example a WLAN router, so that the household appliance may be remotely controlled, for example via a mobile phone using a dedicated app.

Thus, for example in DE 10 2012 214 795 A1 there is disclosed a communication module for a household appliance which comprises a wired internal connection for communication with a internal communication partner, such as control electronics of the household appliance, and further a wireless external connection, such as a wireless LAN connection for communication with an external partner, for example a computer, a server or a smartphone.

It is an object of the present invention to further improve and enhance the existing solutions in an effort to allow for additional communication capabilities. In particular, the present invention aims at providing a communication module for a household appliance that allows reliable and fast communication with additional communication partners.

The above object is solved by the present invention which provides a communication module for a household appliance, the communication module comprising a first wired interface for connection to a serial bus of the household appliance, a second wired adapted for connecting a USB device, and a wireless communication interface.

Whereas the first wired interface provides for connection to a serial bus of the household appliance, so as to allow communication with internal components of the household appliance, such as control electronics for operating the household appliance, and the wireless communication interface, which particularly may be a WLAN interface to provide for connection with a local area network, in accordance with the present invention the communication module comprises an additional wired interface which is adapted for connecting a USB device. By providing for a second wired interface which provides for connection to a USB device, the communication module allows establishing a data connection that can communicate at a much higher data rate than the conventional serial bus connections. That is while a serial bus connection is fully sufficient for communicating instructions and control data for operation of the household appliance, in case that a larger amount of data is to be transferred internally or to and from the household appliance, for example, when the household appliance is equipped with a built in processing and display means that requires a higher data rate than that required for transferring operating parameters, for example a touchscreen unit that allows access to the internet for example to access databases for recipes and the like, the USB connection allows for fast and efficient data transfer. In addition to providing for communication with built in devices, the USB connection also may be used for providing a data connection to an external device, such as a computer or a storage medium, for example when updating operating software for the control of the household appliance, or when transferring personalized user data for setting various operating parameters. Whereas with conventional communication modules such data transfer operations were slow and cumbersome, these difficulties are overcome by the communication module suggested herein, in which the USB connection enables fast data transfer.

Preferred embodiments are defined in the dependent claims.

Thus, while the wireless communication interface basically may use any wireless communication technique, such as LTE, LTE Advanced, Bluetooth or infrared communication, the wireless communication interface preferably is adapted for communication with a Wireless Local Area Network, so as to be able to communicate with WLAN routers as they are in widespread use both for establishing a home network and for providing access to the internet or to telecommunication systems. By providing for a WLAN connection, the communication module allows to easily establish a data connection between the household appliance and a remote device, such as a remote computer or a smart phone, so that operating parameters of the household appliance can be remotely retrieved or altered.

The communication module can comprise a housing having a compartment in which the first wired interface, the second wired interface, and the wireless communication interface are located, as well as a lid which covers the compartment. While the housing provides for protection of the communication module, the lid facilitates the assembly of the device, and further, in case that the lid is designed as a removable lid, allows accessing the components of the communication module. Depending on whether access shall be provided only for maintenance purposes or also during regular use of the communication module, the lid can be designed such that it can be removed without specific tools being required.

Thus, in case that the second wired interface is intended to be permanently connected to a built in communication partner, or when the second wired interface is only frequently connected via USB connection with an external communication partner, such as a computer, a server or another household appliance, the housing can be designed such that the lid also covers the USB connection socket and thus has to be removed in case that a USB plug is to be connected with or disconnected from the USB connection socket. While for establishing a USB connection to an external communication partner, such as a computer, the second wired interface can be designed as a USB socket, i.e. a socket into which can be plugged a standard USB connector, such as a type-A connector, a Mini USB connector, for example a Mini-A connector, a Micro USB, etc., the second wired interface also can comprise a socket for providing for a cable connection to a USB cable or a USB socket, such as a cable connection to a standard USB connection plug which is provided at a different location of the household appliance, such as at the front panel thereof. In the following the term "USB connection socket" thus is to be understood to refer either to a standard USB connector, or to a connector, such a pin connector, for providing for a cable connection to a USB cable or a USB connector.

To nevertheless allow quick access to the USB connection socket, the lid can be designed for quick release, such as by a snap connection. In the alternative, in case that it is preferred to provide for a permanent secure fixing of the lid, the lid can be affixed for example by screws.

On the other hand, the USB connection socket also can be designed to allow for easy access by locating the USB connection socket such that it is accessible from outside of the housing.

In order to provide for a good transmission of the wireless signal, the entire housing of the communication module or at least the lid thereof is designed to be transparent for the respective signal. Thus, particularly when the wireless communication interface is adapted for communication with a Wireless Local Area Network the lid, and preferably the entire housing is made of plastic.

While the wireless communication interface could be connected to an antenna that is provided separately from the communication module, the communication module preferably comprises at least one antenna so that the communication module forms a self-contained unit.

The present invention further provides a household appliance which comprises a communication module as it is suggested herein, wherein the communication module is mounted at a sidewall of the household appliance, preferably close to the front of the household appliance. While in order to provide for good transmission of the wireless signal, the antennas of the communication module should not be covered by any metallic parts, mounting the communication module at a sidewall of the household appliance, and preferably close to the front of the household appliance, provides for design flexibility for the household appliance, and at the same time provides for an unimpeded transmission of the wireless signal to an external communication partner. Thus, for example when the household appliance is an appliance for use in a kitchen, such as a cooking oven or a dishwasher, where it often is preferred that the appliance has metallic front panels, mounting the communication module at a sidewall of the appliance allows for unimpeded signal transmission without having to interrupt the metal front design by a radio-transmissive cover.

For example, when the household appliance is a cooking oven or a dishwasher which has a metallic housing, a sidewall of the metallic housing can be provided with a cutout or a recess in which there is mounted the communication module. In this manner the communication module can be mounted at the household appliance to be easily accessible and without the metallic housing of the household appliance interfering with a wireless communication via the wireless communication interface.

In preferred embodiments the communication module comprises a plastic housing which is mounted in the cutout or recess of the metallic housing of the household appliance. Interference with a wireless communication via the wireless communication interface further can be minimized when the communication module comprises at least one antenna connected to the wireless communication interface, wherein the distance of each antenna to the metallic housing of the household appliance or to any other metal part of the household appliance is at least 5 mm.

To make the best possible use of the space available at the housing of the household appliance, the housing of the communication module may comprises a lid, wherein the housing of the communication module is mounted in the cutout or recess such that the lid extends substantially flush with the sidewall of the housing of the household appliance.

While the first wired interface may be used to establish communication with internal components of the household appliance, such as a control system for controlling the various elements of the household appliance, the household appliance further may comprise a control panel which is provided at a front side of the household appliance and which is connected with the communication module.

In order to allow for a short wired connection between the communication module and the control panel, the communication module preferably is mounted substantially at the same level as the control panel. Thus, for example when the household appliance is a cooking oven having a control panel that is mounted at an upper front portion of the oven housing, the communication module preferably is mounted at the upper front region of the sidewall.

On the other hand, when the household appliance comprises a front door which is pivotable about an axis, wherein the control panel is mounted at the front door, such as in an upper front region of the door or at the upper side of the door, the communication module can be mounted close to the axis. Thus, if the household appliance has a door which is mounted to be pivotable about a vertical axis, as is typically the case in a refrigerator or a microwave oven, the communication module preferable is mounted at the sidewall where the door is hinged. In embodiments in which the household appliance comprises a door which is mounted to be pivotable about a horizontal axis, such as in cooking ovens or dishwashers, the communication module preferable is mounted at one of the sidewalls close to one of the door hinges, so as to allow for a short wire connection to electric elements mounted at the door, such as a control panel which is mounted at the door.

In embodiments in which a cable that is used for providing for the USB connection is to pass a region of the household appliance that is exposed to higher temperatures, such as when the household appliance is an oven, the household appliance preferably is designed such that the USB cable that connects to the second wired interface extends at the exterior side of the housing of the oven, such as in a groove that is provided at the exterior side of the housing, which groove further may comprise a cover which thus provides for fixation of the cable within the groove and which further serves so to protect the cable.

Preferred embodiments of the present invention are described below by reference to the drawings, in which:
- Fig. 1: illustrates a built-in cooker oven that is equipped with a communication module as suggested herein;
- Fig. 2: shows the communication module of Fig. 1 in detail;
- Fig. 3: shows the communication module of Fig. 2 when the module housing is closed with a lid.

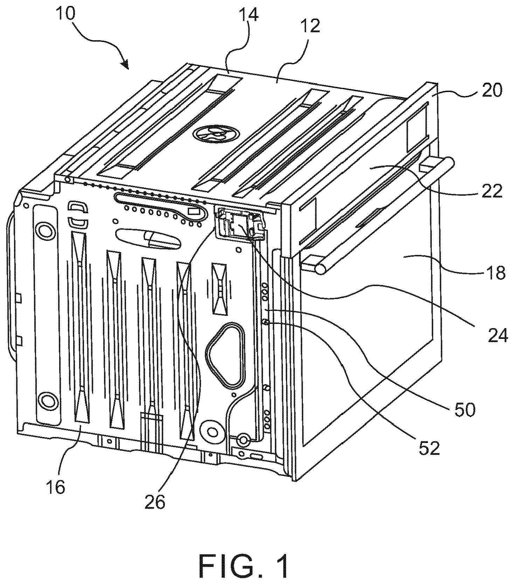

Fig. 1 shows an exemplary embodiment of the present invention, in which the household appliance is a built-in cooker oven 10. Since cooker oven 10 is designed for installation within a kitchen cabinet, it comprises a housing 12 which is formed of sheet metal, and which only at its front side is provided with decorative panels. Thus, while as shown in Fig. 1, the top side 14 and the sides 16 of housing 12 are formed of embossed sheet metal, at the front side which in the built-in state of the cooker oven 10 will be the sole side that is visible from the outside, the cooker oven 10 comprises a pivotable door 18 and a panel 20, in which there are provided a display and control elements for operating the cooker oven 10, such as a touchscreen display 22. Housing 12 in the region behind front panel 20 further comprises control circuitry (not shown) for operation of oven 10.

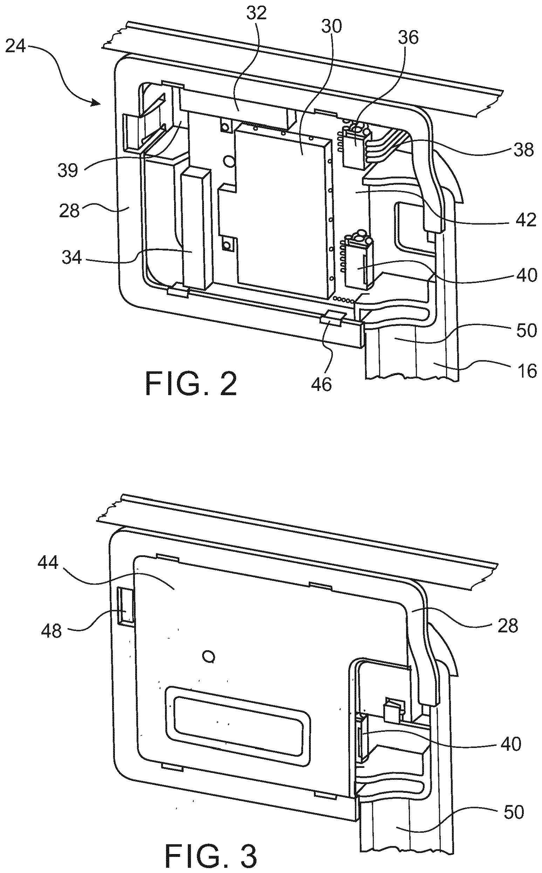

A communication module 24, which is shown in Figs. 2 and 3 in further detail, is mounted in a recess 26 of side panel 16 of housing 12. To provide for close proximity to the oven controls in panel 20 as well as the control circuitry that is located behind front panel 20, the recess 26 is located in an upper region of side wall 16 close to the front of the oven.

As is illustrated in Fig. 2, the communication module 24 comprises a housing 28, which preferably is made of molded plastic and which preferably is attached within recess 26 of side wall 16 by a snap-in connection. Communication module 24 comprises a wireless LAN module 30 which is coupled to a first and a second antenna 32 and 34 for communication with external communication partners. WLAN module 30 is designed to operate in either one of the two standard ISM frequency bands that are reserved for WLAN communication, i.e. the 2.4 GHz band or the 5 GHz band. Communication module 24 further comprises a first wired interface 36 which is connected via a plurality of cables 38 to an internal bus system of cooker oven 10. To enable cables 38 to exit the housing 28, an aperture (not shown) is provided in the rear wall 39 of housing 28. A second wired interface 40 comprises a USB connection socket. The various components of communication module 24 all are attached to a circuit board 42 which provides support for the components as well as connectivity between the components.

Fig. 3 depicts the communication module 24 in a state when housing 28 is closed by a lid 44. Lid 44 is attached within housing 28 by a snap-in connection, to with end the lid comprises four latch elements projecting inwardly from the lid which engage corresponding catches 46 that are provided in the sidewalls of housing 28 (see Fig. 2). To facilitate removal of the lid 44, a recess 48 is formed in one of the sidewalls of housing 28, so as to allow a tool, such as a screwdriver, to be pushed underneath the lid, so as lift off lid 48 against the resilient force provided by the catches 46.

As can be seen from Figs. 2 and 3, housing 28 and 44 are designed such that USB connection socket 40 is accessible from outside the housing 28 also when lid 44 is closed. As noted above, USB connection socket 40 may be used to connect an external component, such as a laptop computer for example during conducting an update of the program software. Alternatively, a built in system component can be connected at USB connection socket 40. Particularly, when as in the illustrated embodiment the household appliance is an oven, care should be taken as regards the placement of an USB cable used to connect a built-in component to USB connection socket 40. Thus, given that the data transmission quality of USB cables usually is temperature sensitive, a USB cable used to connect a built-in component to USB connection socket 40, such as a processing unit that is installed at the bottom of the housing 12, preferably is located to extend along the exterior side of housing 12. To this end housing side wall 16 comprises a groove 50 which extends from communication module 24 to the bottom part of the housing 12. As illustrated in Fig. 1, a plurality of clips 52 is provided within groove 50, which clips are provided to fixate a USB cable that is laid so as to extend within groove 50.

### Reference signs

- 10: cooker oven
- 12: housing of 10
- 14: top side of 12
- 16: side of 12
- 18: door
- 20: panel
- 22: touchscreen display
- 24: communication module
- 26: recess
- 28: housing
- 30: WLAN module
- 32: first antenna
- 34: second antenna
- 36: first wired interface
- 38: cables
- 39: rear wall of 28
- 40: second wired interface / USB connection socket
- 42: circuit board
- 44: lid
- 46: catch
- 48: recess
- 50: groove
- 52: clip

## Claims

1. A communication module (24) for a household appliance (10), the communication module (24) comprising:
a first wired interface (36) for connection to a serial bus of the household appliance;
a second wired interface (40) adapted for connecting a USB device; and
a wireless communication interface (30).

2. The communication module of claim 1, wherein the wireless communication interface (30) is adapted for communication with a Wireless Local Area Network.

3. The communication module of claim 1 or 2, comprising a housing (28) having a compartment in which the first wired interface (36), the second wired interface (40), and the wireless communication interface (30) are located, and a lid (44) which covers the compartment.

4. The communication module of claim 3, wherein the lid (44), and preferably the entire housing (28) is made of plastic.

5. The communication module of claim 3 or 4, wherein the USB connection socket (40) is located to be accessible from outside of the housing (28).

6. The communication module of any one of the preceding claims, further comprising at least one antenna (32, 34) connected to the wireless communication interface (30).

7. A household appliance (10) comprising a communication module (24) as it is defined in any of the preceding claims, wherein the communication module (24) is mounted at a sidewall (16) of the household appliance, preferably close to the front of the household appliance.

8. The household appliance of claim 7, wherein the household appliance (10) has a metallic housing (12), wherein a sidewall (16) of the metallic housing is provided with a cutout or a recess (26) in which there is mounted the communication module (24).

9. The household appliance of claim 8, wherein the communication module (24) comprises a plastic housing (28) which is mounted in the cutout or recess (26) of the metallic housing (12) of the household appliance (10).

10. The household appliance of claim 9, wherein the communication module (24) comprises at least one antenna (32, 34) connected to the wireless communication interface (30), wherein the distance of each antenna to the metallic housing (12) of the household appliance (10) or to any other metal part of the household appliance is at least 5 mm.

11. The household appliance of claim 9 or 10, wherein the housing (28) of the communication module (24) comprises a lid (44), wherein the housing (28) of the communication module (24) is mounted in the cutout or recess (26) such that lid (44) extends substantially flush with the sidewall (16) of the housing (12) of the household appliance (10).

12. The household appliance of any one of claims 7 to 11, further comprising a control panel (22) provided at a front side of the household appliance (10), the control panel being connected with the communication module (24).

13. The household appliance of claim 12, wherein the communication module (24) is mounted substantially at the same level as the control panel (22).

14. The household appliance of claim 12, wherein the household appliance (10) comprises a front door (18) which is pivotable about an axis, wherein the control panel (22) is mounted at the front door (18), and wherein the communication module (24) is mounted close to the axis.

15. The household appliance of any one of claims 8 to 11, comprising a USB cable that connects to the second wired interface (40), wherein said USB cable extends at the exterior side of the metallic housing (12), preferably within a groove (50) provided at the exterior side of the metallic housing (12).
